# EUROPEAN PATENT APPLICATION

(11) **EP 0 997 198 A2**
(43) Date of publication of application: **03.05.2000**
(21) Application number: 99500197.1
(22) Date of filing: 27.10.1999
(51) Int. Cl.: B03C 1/30

(54) **Magnetic field chamber for separating and analysing dust from air**

(30) Priority: 28.10.1998 ES 9802263
(71) Applicant: Ga and Lo, S.L., 28806 Alcala de Henares (Madrid) (ES)
(72) Inventor: Galindo Fernàndez, José Antonio, 28806 Alcala De Henares (Madrid) (ES); Lopez Diaz, Ramon, 28806 Alcala De Henares (Madrid) (ES); Lopez Pérez, Jose Luis, 28806 Alcala De Henares (Madrid) (ES); Galindo Frutos, Juan Ramon, 28806 Alcala De Henares (Madrid) (ES)
(74) Representative: Del Campo Castel, Domingo

(57) **Abstract**

A magnetic field chamber applicable to the separation of suspended particles for analysing the environmental - air, consisting in a structural body (1), fitted with inlet screens with a dual layer filter (2) and (2'), as well as adjustable and directional outlet screens (7) and (7'), housing inside an inlet planetarium (3), an air conductor in its path, and an adjustable and directional outlet planetarium (4) for evacuating out the analysed air, having an interval regulator (9), and magnetic bars or crown (8), constituting the separator field of interferent particles, having also an analysis sensor (5) for transmitting information from a carrier-sensor socle (6) with a link to an electronic circuit.

## Description

### BACKGROUND OF THE INVENTION

The present specification refers to an application for a Patent of Invention, relating to a magnetic field chamber applicable to the separation of suspended partibles for analysing the environmental air, the obvious purpose of which is to carry out a specific analyse of the quality of the air by means of a forced circulation generated by a heat source located inside a chamber presenting a magnetic field through which the separation of suspended particles is carried out, the chamber being fitted, in its inner portion, with a directional planetarium of orientation for the circulation of the air flow, giving access to a measuring sensor with an electronic circuit and fitted with anadjustable outlet according to the density of an interferent agent, bringing about, as a specific purpose, an analyse and control of the air in a permanent way, performing, at the same time, atrans mission of the data as obtained in way fully free of interferences.

### FIELD OF THE INVENTION

This invention will find application in the industry in general, and in a punctual manner, in the industry - dedicated to the manufacture of apparatus, devices and auxiliary elements for controlling and regulating the environment, within the context of the work safety and hygiene standards, and, also, in the industry dedicated to the manufacture of safety apparatus and elements in gas plants, independently of the fact they are domestic, commercial or industrial ones.

### RELATED ART

The applicant is aware of the existence al present of a plurality of apparatus and devices which, duly - installed, generate, starting from themselves, an alarm signal, either optical, acoustic, electronic or amilar, even without checking the existence of a contaminated gas, which when a saturation is provoked by suspended agents having no part in the gas to be detected, determines a phenomenon known as a false alarm.

Nevertheless, the applicant is not aware of the existence at present of a magnetic field chamber capable of being applied to the separation of suspended particles in a constant way, in order to analyse the environmental air, by using a forced circulation generated by a heat source located inside a chamber formed by a magnetic field, by means of which the separa tion of suspended particles is performed, disposing - of an orientation planetarium for the air flow circulation, thereby giving access to a measuring sensor - with an electronic circuit and having an outlet which is adjustable to the density of the interferent agent of air to be analised in a permanent way.

### SUMMARY OF THE INVENTION

The magnetic field chamber applicable to the separation of suspended particles for analysing the environmental air as proposed by the invention, is configured per se as an evident novelty within its specific field of application, since in accordance with its particular characteristics and in collaboration with a related electronic circuit, this related electronic circuit meeting the International Rules, achieves that the element configured as a magnetic field chamber can be applied to detecting apparatus and devices, atmosphere analysers or simple gas detectors, discriminating the suspended agents and displacing them by means of a magnetic and directional action by a planetarium in its separating configuration, this performance being carried out in a fully automatic way, which is to the advantage of making possible to evaluate, in a reliable manner, both the quality and the content of the environmental air.

In a most correct way, the magnetic field chamber - applied to the separation of suspended particles for analysing the environmental air, object of the invention, is constituted starting from the following elements or parts, obviously combined, to wit:
- Structural body
- Inlet planetarium
- Adjustable outlet planetarium
- Magnetic bars or crown
- Volumetric regulator
- Analysis sensor
- Carrier-sensor socle

The operation of the magnetic field chamber applicable to the separation of suspended particles having a forced circulation, takes samples of air by increasing the environmental temperature at a predetermined value in accordance with its application, in the interval - existing between the analysis sensor and the planetarium platform, to which it accedes, the interferent larticles being separated by the action of the magnetic barriers.

The inlet located at the lower part of the structural body, has corresponding screens or filters having a dual layer, achieving the air acceding inside is driven through the inlet planetarium and pulled by the action of the heat field, arranging the particles by the action of the magnetic bars or zone towards the outlet screens and been directed towards the adjustable outlet planetarium, so allowing the analysis of the airborne particles to be analysed by said analysis sensor, which will act in the interval existing between same and the planetarium platform, having an interval regulator in order to configure the space according to the characteristics of the gas to be analysed, the sensor being connected by the carrier-sensor socle in order - to link an independent related electronic circuit or forming a single body.

In short, the invention according to the attraction towards the wall configuring the magnetic field chamber achieves the suspended particles to be separated for analysing the air, especially for the gas detection - systems in one of its applications, being configured in a specific manner in order to obtain the separation of the interferent agents distorting the reliability and provoking situation which do not correspond to that searched for.

Obviously, when the magnetic field chamber must obtain answers in contaminant values, such as fumes or suspensed particles, the magnetic field can be inverted, creating an epicentre for obatining a group of contaminants or particulates, their planetarium being inversed and directional to a confluence point predetermined in the chamber.

Lastly, it is to bear in mind that the magnetic field chamber in its different applications to energetic gases, hydrocarbons, sanitary products, reagents or contaminants, can present a configuration with regard to form and size adaptable to several geometric figures, such as those having a cylindrical, conical, rectangular, etc. configuration, and also the planetaria, both of inlet and outlet type, on the basis of their density and molecular formula, having magnetic crown or bars, the power in gauss is proportionally direct to the values configuring the agent subjected to an analysis.

### DESCRIPTION OF DRAWINGS

In order to complement this description and aid to a better understanding of the characteristics of the invention, the appending drawings, which are a part of this - specification, show, by way of illustrative and non-limiting example, the following:

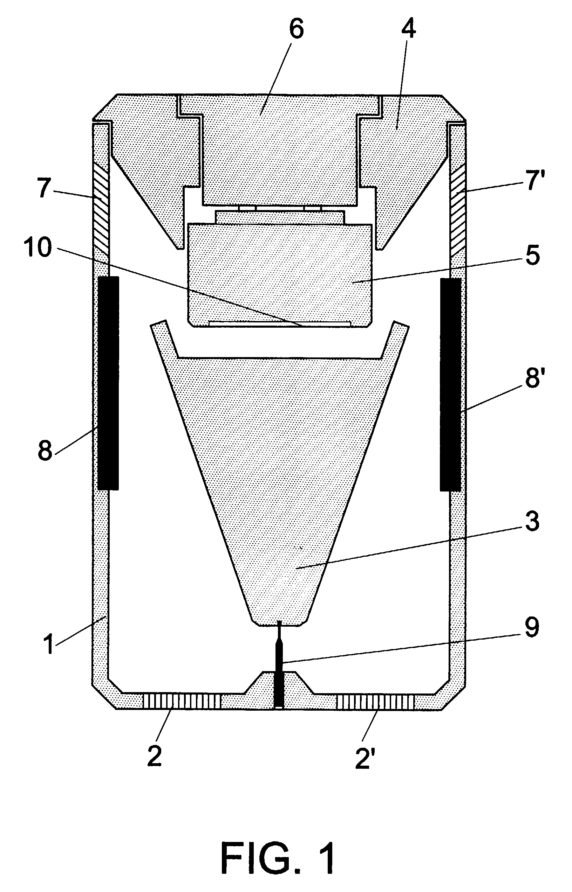

Figure 1 corresponds to a sectional view of the object of the invention relative to a magnetic field chamber applicable to the separation of suspended particles for analysing the environmental air.

### PREFERRED EMBODIMENT OF THE INVENTION

In figure 1 and only, it can be seen that the magnetic fiel chamber applicable to the separation of suspended particles for analysing the environmental air, incorporates the possibility of forming a magnetic field in attraction sense towards the inner walls of the chamber, for a specific application, being fitted with a link with a related electronic circuit.

Particularly, following this figure, one can observe its configuration starting from a structural body (1), having inlet screens or grilles (2) and (2'), the inlet screens (2) and (2') being fitted with a double layer - filter, and presenting adjustable and directional oulet screens (7) and (7'), the structural body (1) housing, in its inner zone, an inlet planetarium (3) acting as an air conductor in its path, having, on the upper part, an adjustable and directional outlet planetarium (4), intended for facilitating the evacuation towards the exterior of the analysed air, relaying on an interval regulator (9) configuring the space relative to the object to which it is intended, presenting also magnetic bars or crown (8), constituting the separator field of interferent particles, the system being completed by an analysis sensor (5) for transmitting information via the link to the electronic circuit through the carrier-sensor socle.

It is to be pointed out that the magnetic field chamber applicable to the separation of suspended particles for analysing the environment air, is preferably designed to be mounted in most of detection apparatus and devices, existing at present in the market, both jointly or separately from the related electronic circuit.

In synthesis, the analysis of the air quality by means of the chamber adapted to a magnetic field, for separating suspended particles and of the forced circulation type, incorporates a functional combination of a structural body having an air inlet through screens of dual layer (2) and (2'), with filter ouward, the air being conducted inside the chamber by an inlet planetarium (3), forcing the total of the samples taken to circulate directionally toward the magneti field formed by nagnetic bars or a magnetic crown (8) and (8'), in order to separate the existing suspended particles, and these being directed outside by the action of the adjustable outlet planetarium (4), which is qualified to control a retention equivalent to the gas of reference, object of the analysis, giving access to the remaining air, free of interferent particles, to the interval of measure created between the analysis sensor (5) and the planetarium platform, the call being performed by means of the sourcefor incresing the temperature at a specific value to be determined according to the sought application.

The analysis sensor has, at its lower part, a screen (10) to protect the filter on the analysis sensor (5), the numeral (9) being the reference for the interval regulator fastened at one of its ends, exactly at the lower one to the central zone of the body (1) while the opposed end is fixed to the lower part of the inlet planetarium (3).

Lastly, it is to be pointed that the invention finds a preferred application to the different gas families, independently of these being energetic ones, hydrocarbons, sanitary products, reagents or contaminants, their configuration being varied, as well as their size and form, and being adapted to cylindrical, conical or rectangular bodies, as well as the planetaria and magnetic fields of its structure, given the incidence of the values of its molecular formule, explosive limit (%vol.), and density (air = 1), requiring a different processing, even being of the same family of gases.

It is not considered necessary to extend this description for any skilled in the art to understand the scope of the invention and the advantages derived from it.

The materials, shape, size and arrangement of the components will be open to variation, provided that it does not imply any alteration to the essence of the invention.

The terms under which this specification has been described should be always taken in an ample and non-limiting sense.

## Claims

1. A magnetic field chamber applicable to the separation of suspended particles for analysing the environmental air, characterized in that it is constituted starting from a structural body (1), fitted, at its lower zone, with inlet screens with a dual layer filter (2) and (2'), having also at the lateral upper part adjustable - and directional outlet screens (7) and (7'), housing an inlet planetarium (3) in its inner lower zone, air conductor fixed at its lower zone by an interval regulator (9) to the lower central zone of the body (1), having alving also a adjustable and directional outlet planetarium (4) for evacuating out the analysed air, relying on a magnetic crown or bars (8) and (8'), which constitute a separator field of interferent particles, as well as an analysis sensor (5), fitted with a screen (10), at its lower part, which protects the filter of the sensor (5), the transmission of information being carried out by a link to an electronic circuit through a carrier-sensor socle (6).

2. A magnetic field chamber applicable to the separation of suspended particles for analysing the environmental air, according to claim 1, characteized in that air is conducted inside the body (1) by the inlet planetarium (3), circulating dicectionally and orientating the samples towards the magnetic field formed by magnetic crown or bars (8) and (8'), the suspended particles being separated, which are directed out by the action of the adjustable outlet planetarium (4), retaining an amount which is equivalent to the gas of reference being analysed, giving access of the free remaining air without particles considered as interferent to the measuring interval created between the sensor (5) and the planetarium platform.

3. A magnetic field chamber applicable to the separation of suspended particles for analysing the environmental air, according to any of the preceding claims, characterized in that it is fitted with source for increasing the temperature at a specific value according to the air characteristics to be analysed.

4. A magnetic field chamber applicable to the separation of suspended particles for analysing the environmental air, according to any of the preceding claims, characterized in that the body (1), as well as the elements incorporated into its inner zone, can present a cylindrical, conical or rectangular configuration.

5. A magnetic field chamber applicable to the separation of suspended particles for analysing the environmental air, according to any of the preceding claims, characterized in that the magnetic field chamber is pulled to the walls configuring same, separating the suspended particles in order to separate the interferent agents, being also capable of reversing the magnetic field creating an epicentre for grouping contaminants or particles, its planetarium (3) reverse and directional to a confluence point which is predetermined in the chamber.
